# EUROPEAN PATENT APPLICATION

(11) **EP 4 467 526 A1**
(43) Date of publication of application: **27.11.2024**
(21) Application number: 24177126.0
(22) Date of filing: 21.05.2024
(51) Int. Cl.: C04B 35/00, C04B 35/515, B26F 1/24, B26D 7/08

(54) **ULTRASONIC NEEDLE INSERTION OF PREFORMS**

(30) Priority: 23.05.2023 US 202363503836 P
(71) Applicant: RTX Corporation, Farmington, CT 06032 (US)
(72) Inventor: SUDRE, Olivier H., East Hartford, 06118 (US); KOLE, Molly, East Hartford, 06118 (US); WANG, Zhigang, East Hartford, 06118 (US)
(74) Representative: Dehns

(57) **Abstract**

A method of displacing tows of a preform prior to densification includes aligning a multi-tip tool with the preform and oscillating the multi-tip tool in contact with tows of the preform. A plurality of tips of the tool contact the tows of preform during operation and thereby displace tows laterally within a ply.

## Description

### BACKGROUND

The present disclosure relates generally to preparing preforms for ceramic matrix composites (CMCs) and, more particularly, to a method of displacing fiber tows of the preform using ultrasonic needle insertion (UNI).

Lightweight ceramic matrix composites (CMC) are highly desirable materials for gas turbine engine applications. CMCs, and particularly SiC/SiC CMCs (having silicon carbide matrix and fibers) exhibit excellent physical, chemical, and mechanical properties at high temperatures, making them particularly desirable for producing hot section components, including blade outer air seals (BOAS), vanes, blades, combustors, and exhaust structures. Like other materials, it can be critical to the performance, durability, and function of the CMC component to cool the CMC component to maintain appropriate operating temperatures.

CMCs can be manufactured by densifying a preform using a chemical vapor infiltration process or melt infiltration process that introduces a matrix material through preform pores, which are defined by a woven structure of fiber tows. During some manufacturing processes, these pores can become narrow making infiltration of the matrix material difficult.

### SUMMARY

A method of displacing tows of a preform prior to densification, according to an example of this disclosure, includes aligning a tool with the preform and oscillating the tool along a longitudinal direction of the tool at an ultrasonic frequency greater than twenty kilohertz. One or more tips of the oscillating tool contact the tows of preform and thereby displace tows laterally within a ply.

### BRIEF DESCRIPTION OF THE DRAWINGS

FIG. 1 is a perspective view of an ultrasonic needle insertion (UNI) apparatus incorporating an example multi-tip tool.
FIG. 2 is an enlarged view of the multi-tip tool of FIG. 1.
FIG. 3 is an enlarged view of a tip of multi-tip tool.
FIG. 4 is an example preform.
FIG. 5 is a perspective view of an example ultrasonic needle insertion (UNI) apparatus incorporating a single-tip tool.
FIG. 6 is an enlarged view of the single-tip tool of FIG. 5.
FIG. 7 is a flowchart describing a method for using the multi-tip tool of FIG. 1, or the single-tip tool of FIG. 4 to displace fibers of the preform of FIG. 3.

### DETAILED DESCRIPTION

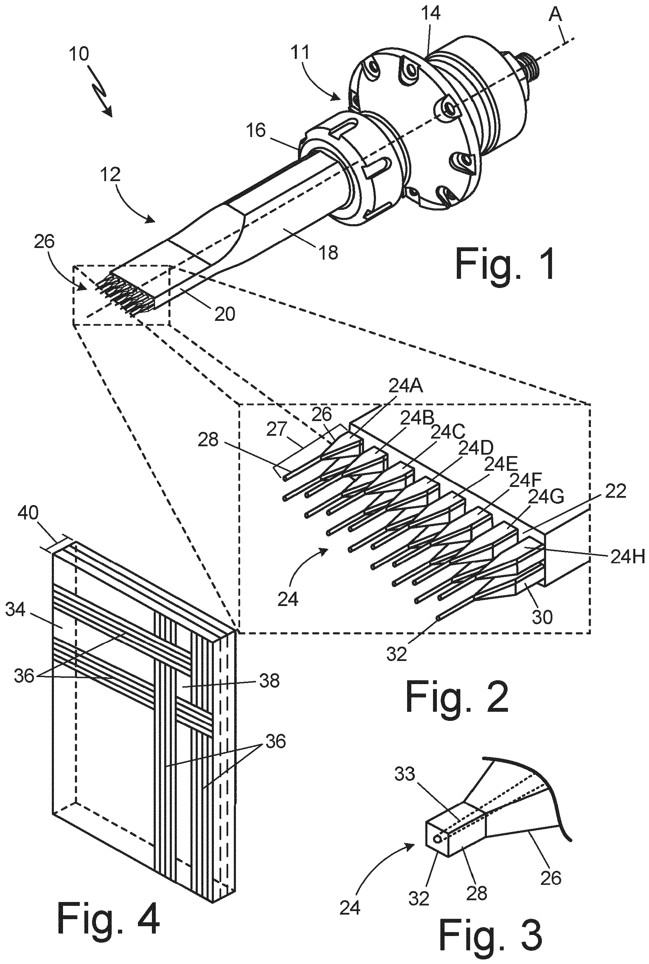

FIG. 1 is a perspective view of UNI assembly 10 having multi-tip tool 12. UNI assembly 10 is configured to simultaneously displace a plurality of fiber tows of a preform. FIG. 2 is an enlarged view of multi-tip tool 12. FIG. 3 is an enlarged view of an example tip of multi-tip tool 12. FIG. 4 is an example preform. FIGS. 1-4 are discussed together herein. UNI assembly 10, UNI apparatus 11, multi-tip tool 12, transducer 14, collet 16, tool body 18, end portion 20, output base 22, tips 24, tapered portions 26, distal portions 28, extension portions 30, terminal ends 32, passages 33, preform 34, tows 36, pores 38, plies 40, and longitudinal axis A are shown. UNI apparatus 11 can be any conventional ultrasonic machining apparatus or variation thereof configured for operation with a tool for ultrasonic needle insertion. Collet 16 is adapted to receive and retain multi-tip tool 12. Electrical energy input to transducer 14 is converted to mechanical vibrations along longitudinal axis A at high frequency (usually 20-40 kHz). Transducer 14 transmits the vibrational energy to multi-tip tool 12 when UNI apparatus 11 is in use. Multi-tip tool 12 includes tool body 18, end portion 20, output base 22, and tips 24. Tips 24 are disposed at an opposite end of tool body 18 from collet 16. Tips 24 extend from output base 22, which is disposed at a terminal end of end portion 20. Tips can include shaping portion 27 configured to displace tows 36 to achieve a desired shape of pores 38 in preform 34. Shaping portions 27 can include tapered portions 26 disposed adjacent to output base 22 and distal portions 28 extending to terminal ends 32.

Tool body 18 is a sonotrode configured to vibrate along longitudinal axis A at a desired amplitude and at a frequency usually around 20-40 kHz. The target frequency is selected to excite a longitudinal mode of tip 24 and to avoid bending modes of tip 24. For example, the target frequency may coincide with a resonant frequency that excites and longitudinal mode of tip 24 that is at least 300 Hz from the nearest resonant frequency that excites a bending mode of tip 24. Vibration of tips 24 transmits energy to displace tows of preform 34. Tool body 18 includes end portion 20 configured to amplify the vibration amplitude at output base 22 and provide a desired vibration amplitude input to tips 24. Multi-tip tool 12 can be configured to vibrate along longitudinal axis A at an amplitude ranging from 1-2 microns to 100 microns. Multi-tip tool 12 is configured to provide a substantially uniform vibration amplitude across output base 22 such that all tips 24 have a substantially equal input amplitude. The number of tips 24 and spacing of tips 24 can be selected based on the targeted number and spacing of pores 38. The number of tips 24 and spacing of tips 24 can be limited to maintain a substantially uniform vibration amplitude across all tips 24 and to meet a target amplitude. For example, in applications having a target amplitude between 20 to 50 microns, a total tip span can be limited to less than about 1.5 inches to maintain uniformity of vibration amplitude on all tips 24. Tips 24A-24H can be formed of different materials and/or can include internal cavities without outlets at terminal ends 32. In other examples, tips 24A-24H can include internal passages 33 that extend through tool body 18 and UNI apparatus 11 to a supply manifold, which may receive a gas or fluid from an external source.

Tips 24 can be of uniform length and size and uniformly spaced across output base 22, as shown in FIGS. 1 and 2, to substantially balance a mass distribution across output base 22 and with respect to longitudinal axis A. The substantially balanced mass achieves a substantially uniform vibration amplitude at the output surface (terminal ends 32 of tips 24). Tips 24 are disposed in parallel to each other and parallel to longitudinal axis A. In operation, multi-tip tool 12 is configured to be positioned relative to preform 34 such that all tips 24 are positioned at a uniform height above preform 34 to allow for simultaneous displacement of tows.

Tips 24 can be removably fastened to output base 22 (e.g., via threaded connection) to allow replacement of tips 24. Tips 24 can have any shape known in the art. As shown in FIGS. 1 and 2, tips 24 can have a laidback-type tapered portion 26. Tips 24 can include distal portion 28, which extends from tapered portion 26 to the output surface (terminal end 32). Tapered portion 26 can have a polyhedral shape with a trapezoidal output base converging toward distal portion 28. Distal portion 28 can be cylindrical. Other tip shapes are contemplated including, but not limited to, tips having a conical tapered portion. Terminal end 32 can be angled to such that the output surface of terminal end 32 is disposed in a plane substantially parallel to a surface of preform 34. At least a subset of tips 24 (e.g., tips 24B-26H) can have extension portions 30 disposed adjacent to output base 22. Extension portions 30 are intended to extend a length of tips 24B-24H, such that terminal ends 32 are disposed a uniform distance from preform 34. Extension portions 30 can have a shape matching a base of tapered portion 26. In other embodiments, tips 24 can have other shapes, including but not limited to tips having a conical tapered portion.

As shown in FIGS. 1 and 2, output base 22 can have a substantially rectangular shape sized to substantially match a combined perimeter of tips 24 at output base 22. Tips 24 are uniformly spaced across output base 22 to substantially balance the mass across output base 22 and provide a substantially uniform vibration amplitude at the output surface (terminal ends 32). Output base 22 can have other shapes and sizes depending on the number and arrangement of tips 24. For example, tips 24 can be arranged in a single row or in multiple rows as shown in FIGS. 1 and 2. The arrangement of tips 24 can be selected based on the arrangement of pores, the weave pattern of tows, or both of the preform. The number of tips 24 is not limited to the embodiment shown. The number of tips 24 is generally limited by the size of tool body 18 required to provide a desired output amplitude at tips 24. Unbalanced mass distribution can result in bending mode vibration, which can lead to failure of tips 24 and/or multi-tip tool 12. It will be understood that multi-tip tool 12 includes at least two tips disposed on opposite ends of output base 22 and that any additional tips 24 provided therebetween are uniformly spaced to balance the mass across output base 22.

End portion 20 can be shaped to provide a transition between a cylindrical portion of tool body 18 and output base 22. As shown in FIGS. 1 and 2, material can be removed from opposite sides of tool body 18 in a manner providing end portion 20 with planar walls converging toward output base 22. Additional material can be added between planar walls forming portions that diverge from tool body 18 to edges of output base 22. End portion 20 can amplify the vibration amplitude output at output base 22. The shape of end portion 20 can vary based on a shape of output base 22 and is not limited to the shapes disclosed herein.

Terminal ends 32 can have a blunt or rounded shape. Example blunt terminal ends 32 include a flat face oriented normal to longitudinal axis A. Rounded shapes for terminal ends 32 include hemispherical ends. Other shapes can be envisioned.

In some examples, one or more tips 24 can include internal passage 33 as shown in FIG. 3. Internal passage 33 extends parallel to longitudinal axis A through tool body 18 to tip 24. From output base 22, internal passage 33 extends through tapered portion 26, distal portion 28, and, in some examples, extension portion 30. Internal passage 33 intersects terminal end 32 of respective one or more tips 24 such that fluid or gas may be dispensed from terminal ends 32 of tips 24. Examples of tool 12 that include multiple internal passages 33 may include a manifold section that distributes fluid or gas to respective passages 33 from an external source.

As shown in FIG. 4, example preform 34 is constructed from fiber tows 36, which may or may not include particles interposed between the fiber tows 36. At this stage of manufacture, preform 34 is not incorporated in a ceramic matrix. For example, preform 34 can include silicon carbide tows 36 woven into plies 40, which are stacked together to form preform 34. Voids between adjacent tows 36 within plies 40 define pores 38. The techniques disclosed herein are especially useful to reducing or eliminating damage to preforms with fibers arranged transversely or perpendicularly to longitudinal axis A such the tips 26 tend to laterally displace tows 36 of preform 14 rather than breaking or fraying tows 36 of preform 34.

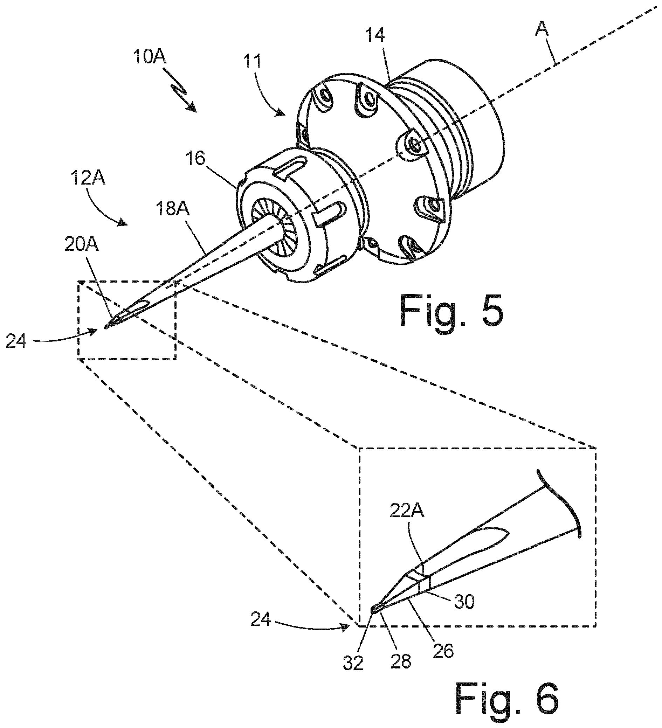

FIG. 5 is a perspective view of example ultrasonic needle insertion (UNI) assembly 10A incorporating single-tip tool 12A. FIG. 6 is an enlarged view of single-tip tool 12A. FIGS. 5-6 are discussed together herein. UNI assembly 10A, UNI apparatus 11, single-tip tool 12A, transducer 14, collet 16, tool body 18A, end portion 20A, output base 22A, tip 24, tapered portion 26, distal portion 28, extension portion 30, terminal end 32, and longitudinal axis A are shown. UNI assembly 10A has the same components as UNI assembly 10 except for differences described below. UNI assembly 10A includes UNI apparatus 11, which converts electrical energy to mechanical vibrations along longitudinal axis A and includes transducer 14 and collet 16 as described above.

Instead of multi-tip tool 12, UNI assembly 10A includes single-tip tool 12A received within collet 16 of UNI apparatus 11. Single-tip tool 12A includes tool body 18A, end portion 20A, output base 22A, and tip 24. Tip 24 is disposed at an opposite end of tool body 18A from collet 16. Tip 24 extends from output base 22A, which is disposed at a terminal end of end portion 22A. Tip 24 includes shaping portion 27, which may include one or more of tapered portion 26, distal portion 28, extension portion 30, and terminal end 32 as described above.

Like tool body 18, tool body 18A is a sonotrode configured to vibrate along longitudinal axis A at a desired amplitude and at a frequency as described above. Vibration of tip 24 transmits energy to displace tows of preform 34 depicted in FIG. 4. Tool body 18A includes end portion 20A configured to amplify the vibration amplitude at output base 22A and provide a desired vibration amplitude input to tip 24. Tip 24 can be configured to meet to meet a target amplitude or have an internal passage as discussed above.

As shown in FIGS. 5 and 6, output base 22A can have a substantially rectangular shape sized to substantially match a perimeter of tip 24 at output base 22A. End portion 20A can be shaped to provide a transition between a cylindrical portion of tool body 18A and output base 22A. As shown in FIGS. 5 and 6, material can be removed from opposite sides of tool body 18A in a manner providing end portion 20A with planar walls converging toward output base 22A. End portion 20A can amplify the vibration amplitude output at output base 22A. The shape of end portion 20A can vary based on a shape of output base 22A and is not limited to the shapes disclosed herein.

UNI assembly 10A incorporating single-tip tool 12A can be used in place of or in addition to UNI assembly 10, which incorporates multi-tip tool 12. Oscillating single-tip tool 12A via UNI apparatus 11 can be used to displace tows of preform 34 in a manner similar to for multi-tip tool 12 described above.

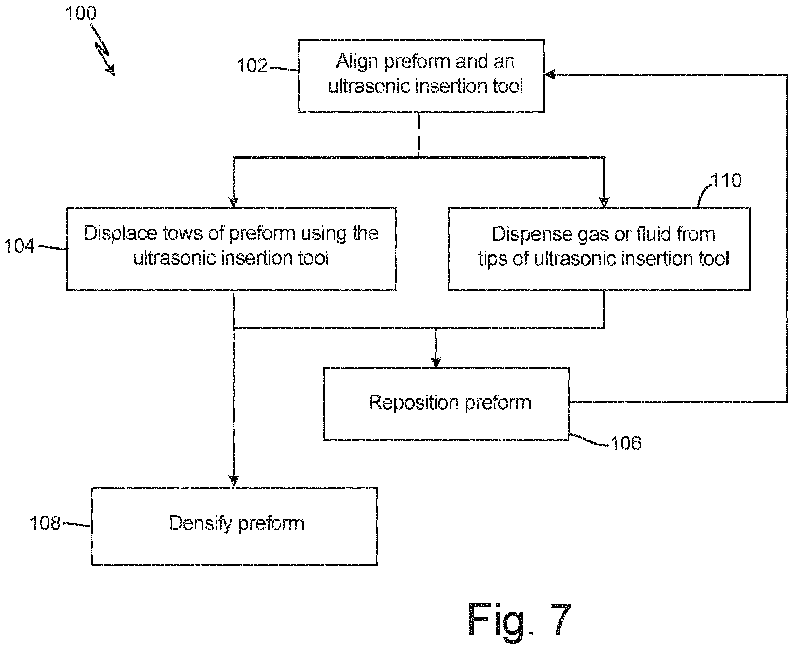

FIG. 7 is a flow chart of method 100 for displacing fibers of a preform 34 using multi-tip tool 12 or single-tip tool 12A. The following describes method 100 using multi-tip tool 12. However, single-tip tool 12A can be used in place of multi-tip tool 12 in the following description. Method 100 includes steps 102 and 104. In other examples, method 100 can include one or more of steps 106, 108, and 110. The sequence depicted is for illustrative purposes only and is not meant to limit the method 100 in any way as it is understood that the portions of the method can proceed in a different logical order, additional or intervening portions can be included, or described portions of the method can be divided into multiple portions, or described portions of the method can be omitted without detracting from the described above.

In step 102, an operator aligns preform 34 with tool 12 or aligns tool 12 with preform 34. Aligning preform 34 with tool 12 or aligning tool 12 with preform 34 can involve orientating the preform, or a localized region of the preform normal to longitudinal direction A of the ultrasonic needle insertion (UNI) apparatus. In other examples, alignment of preform 34 and tool 12 can include orientating the preform, or a localized region of the preform at an oblique angle to longitudinal direction A. In each instance, the first region of preform 34 coincides with tool 12.

In step 104, the operator uses ultrasonic needle insertion (UNI) to displace fibers of preform 34. During step 104, preform 34 has not been incorporated into a ceramic matrix composite using a densification process. Hence, fibers of preform 34 can be displaced laterally within plane of the preform, or within a plane of respective plies, with relative ease compared to a CMC in which the preform has been incorporated into a ceramic matrix.

During step 104, one or more blunt or hemispherical tips of tool 12, one or more flanks of a tapered sections, or a combination of both one or more blunt tips and one or more taper section flanks may engage tows of preform 34 and thereby laterally displace tows of preform 34 as described above. The vibratory motion of tool 12 along longitudinal direction A reduces friction between tool 12 and tows 36, which reduces the likelihood tows 36 of preform 34 will break or fray. Further, one or more blunt or hemispherical tips 24 as well as one or more tapered flanks reduce the likelihood that tool 12 cuts tows 36 of preform 34. Less breakage, fraying, and cutting of preform tows improves structural characteristics of the CMC.

Step 104 may include aligning at least some of tips 24 with pores 38 of preform 34. With adequate pore-to-tip alignment, fewer tows 36 of preform are subjected to direct contact with tips 24. Ergo lateral displacement of tows 36 tends to occur on flanks of respective tips, which reduces breakage and wear of tows 36 and reinforces the periphery of the hole.

In step 106, the operator repositions preform 34 relative to tool 12. Repositioning preform 34 can include aligning a second region of preform 34 with tool 12 according to a predetermined pattern that is different from the first region. In some examples, the first region and the second region can partially overlap. In other examples, the first region does not overlap from the second region. In certain examples, the first region and the second region can be adjacent such tool engages pores 38 of preform 34 neighboring pores 38 of the second region. After repositioning preform 34 with respect to tool 12, steps 102 and 104 can be repeated to displace fibers of the second region of preform 34.

In step 108, preform 34 is densified. For example, preform 34 can be densified by placing preform 34 within a reactor and subjecting preform 34 to a gaseous precursor and matrix material using a chemical vapor infiltration (CVI). In other examples, preform 34 can be exposed to a melt material containing a matrix material using a melt infiltration process. After densification, preform 34 is embedded within a ceramic matrix to form a ceramic matrix composite (CMC).

In some examples, method 100 includes dispensing fluid or gas from tips of tool 12 in step 110, which occurs concurrently with displacing preform tows 36 in step 104. Air dispensed as jets from tips 24 can displace tows 36 of preform before tips 24 engage preform 34, or can separate tows 36 of preform that are contact each other in the absence of air jets. Tow separation may further reduce friction between adjacent tows 36 of preform 34, making tow displacement easier for tool 12 and further reducing a likelihood of tow breakage or wear. Tool 12 may instead dispense a fluid from tips (e.g., a solvent), which can make tows 36 of preform 34 more pliant and thus easier to displace without damage. In other examples, tool 12 may dispense water vapor from tips 24, which not only separates tows 36 of preform 34, but also renders tows 36 of preform more pliant.

Any relative terms or terms of degree used herein, such as "substantially", "essentially", "generally", "approximately" and the like, should be interpreted in accordance with and subject to any applicable definitions or limits expressly stated herein. In all instances, any relative terms or terms of degree used herein should be interpreted to broadly encompass any relevant disclosed embodiments as well as such ranges or variations as would be understood by a person of ordinary skill in the art in view of the entirety of the present disclosure, such as to encompass ordinary manufacturing tolerance variations, incidental alignment variations, transient alignment or shape variations induced by thermal, rotational or vibrational operational conditions, and the like. Moreover, any relative terms or terms of degree used herein should be interpreted to encompass a range that expressly includes the designated quality, characteristic, parameter or value, without variation, as if no qualifying relative term or term of degree were utilized in the given disclosure or recitation.

### Discussion of Possible Embodiments

The following are non-exclusive descriptions of possible embodiments of the present invention.

### Method of preparing a preform for a ceramic matrix composite using a single-tip tool

A method of preparing a preform for a ceramic matrix composite includes, according to an example of this disclosure, among other possible things includes aligning a tool with the preform and displacing a tow of the preform in a lateral direction of a ply, prior to densifying the preform, by oscillating the tool such that the tip contacts the tow of the preform.

The method of the preceding paragraph can optionally include, additionally and/or alternatively, any one or more of the following steps, features, configurations and/or additional components.

A further embodiment of the method, wherein the tip extends parallel to a longitudinal direction of the tool.

A further embodiment of any of the foregoing methods can further include dispensing fluid from the tip via a passage extending longitudinally through the tip.

A further embodiment of any of the foregoing methods, wherein the fluid can be a solvent.

A further embodiment of any of the foregoing methods can further include dispensing gas from the tip via a passage extending longitudinally through the tip.

A further embodiment of any of the foregoing methods, wherein the gas can be water vapor.

A further embodiment of any of the foregoing methods, wherein the gas can be air.

A further embodiment of any of the foregoing methods, wherein a terminal end of the tip can be blunt.

A further embodiment of any of the foregoing methods, wherein a terminal end of the tip can be hemispherical.

A further embodiment of any of the foregoing methods, wherein displacing the tow of the preform includes engaging the terminal end of the tip with the tow of the preform.

A further embodiment of any of the foregoing methods, wherein the tip can include a tapered section such that the tip has decreasing cross-sectional area towards the terminal end.

A further embodiment of any of the foregoing methods, wherein displacing the tow of the preform can include engaging the tow of the preform with the tapered section.

A further embodiment of any of the foregoing methods, wherein aligning the tool with the preform can include orientating the preform normal to the longitudinal direction of the tool.

A further embodiment of any of the foregoing methods, wherein aligning the tool with the preform can include orientating the preform at an oblique angle to the longitudinal direction of the tool.

A further embodiment of any of the foregoing methods, wherein aligning the tool can include aligning a pore of the preform with the tip in which the pore is defined by a woven pattern of tows of the preform.

A further embodiment of any of the foregoing methods, wherein the tip includes a shaping portion.

A further embodiment of any of the foregoing methods can include realigning the tool with a second region of the preform according to a predetermined pattern.

A further embodiment of any of the foregoing methods can include displacing a second tow of the preform within the second region, prior to densification, by oscillating the tool such that the tip displaces the second tow of the preform laterally within the ply.

A further embodiment of any of the foregoing methods, wherein displacing the tow of the preform includes oscillating the tool at a frequency greater than twenty kilohertz.

A further embodiment of any of the foregoing methods can include densifying the preform by exposing the preform to a gaseous precursor and matrix material within a reactor.

A further embodiment of any of the foregoing methods, wherein the tool can include a tool body extending longitudinally from a collet to an output base.

A further embodiment of any of the foregoing methods, wherein the tip can extend longitudinally from the output base.

A further embodiment of any of the foregoing methods, wherein the tip can include a shaping portion.

A further embodiment of any of the foregoing methods, wherein the shaping portion can include a distal section at a terminal end of the tip.

A further embodiment of any of the foregoing methods, wherein the shaping portion can include a tapered section extending with a decreasing cross-section from a base cross-sectional area towards the distal section.

### Method of preparing a preform for a ceramic matrix composite using a multi-tip tool

A method of preparing a preform for a ceramic matrix composite includes, according to an example of this disclosure, among other possible things includes aligning a multi-tip tool with the preform and displacing tows of the preform in a lateral direction of a ply, prior to densifying the preform, by oscillating the multi-tip tool such that the plurality of parallel tips contact tows of the preform.

The method of the preceding paragraph can optionally include, additionally and/or alternatively, any one or more of the following steps, features, configurations and/or additional components.

A further embodiment of the method, wherein the multi-tip tool can include a plurality of tips, each tip extending parallel to a longitudinal direction of the multi-tip tool.

A further embodiment of any of the foregoing methods can further include dispensing fluid from the plurality of parallel tips via passages extending longitudinally through respective tips.

A further embodiment of any of the foregoing methods, wherein the fluid can be a solvent.

A further embodiment of any of the foregoing methods can further include dispensing gas from the plurality of parallel tips via passages extending longitudinally through respective tips.

A further embodiment of any of the foregoing methods, wherein the gas can be water vapor.

A further embodiment of any of the foregoing methods, wherein the gas can be air.

A further embodiment of any of the foregoing methods, wherein terminal ends of the plurality of tips can be blunt.

A further embodiment of any of the foregoing methods, wherein terminal ends of the plurality of tips can be hemispherical.

A further embodiment of any of the foregoing methods, wherein displacing tows of the preform includes engaging terminal ends of the plurality of tips with tows of the preform.

A further embodiment of any of the foregoing methods, wherein each of the plurality of tips can include a tapered section such that the plurality of tips has decreasing cross-sectional areas towards respective terminal ends.

A further embodiment of any of the foregoing methods, wherein displacing tows of the preform can include engaging tows of the preform with the tapered section.

A further embodiment of any of the foregoing methods, wherein aligning the multi-tip tool with the preform can include orientating the preform normal to the longitudinal direction of the multi-tip tool.

A further embodiment of any of the foregoing methods, wherein aligning the multi-tip tool with the preform can include orientating the preform at an oblique angle to the longitudinal direction of the multi-tip tool.

A further embodiment of any of the foregoing methods, wherein aligning the multi-tip tool can include aligning at least some pores of the preform with the plurality of tips in which the pores are defined by a woven pattern of tows of the preform.

A further embodiment of any of the foregoing methods, wherein each tip of the plurality of tips includes a shaping portion.

A further embodiment of any of the foregoing methods can include realigning the multi-tip tool with a second region of the preform according to a predetermined pattern.

A further embodiment of any of the foregoing methods can include displacing tows of the preform within the second region, prior to densification, by oscillating the multi-tip tool such that the plurality of parallel tips displace tows of the preform laterally within the ply.

A further embodiment of any of the foregoing methods, wherein displacing the tows of the preform includes oscillating the multi-tip tool at a frequency greater than twenty kilohertz.

A further embodiment of any of the foregoing methods can include densifying the preform by exposing the preform to a gaseous precursor and matrix material within a reactor.

A further embodiment of any of the foregoing methods, wherein the multi-tip tool can include a tool body extending longitudinally from a collet to an output base.

A further embodiment of any of the foregoing methods, wherein the multi-tip tool can include a plurality of tips extending longitudinally from the output base.

A further embodiment of any of the foregoing methods, wherein each of the plurality of tips can include a shaping portion.

A further embodiment of any of the foregoing methods, wherein each of the shaping portions can include a distal section at a terminal end of the tip.

A further embodiment of any of the foregoing methods, wherein each of the shaping portions can include a tapered section extended with a decreasing cross-section from a base cross-sectional area towards the distal section.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method of preparing a preform (34) for a ceramic matrix composite, the method comprising:
aligning a tool (12; 12A) with the preform (34), wherein the tool (12; 12A) comprises a tip (24) extending parallel to a longitudinal direction (A) of the tool (12; 12A); and
displacing a tow (36) of the preform (34) in a lateral direction of a ply (40), prior to densifying the preform (34), by oscillating the tool (12; 12A) such that the tip (24) contacts the tow (36) of the preform (34), wherein displacing the tow (36) of the preform (34) includes oscillating the tool (12; 12A) at a frequency greater than twenty kilohertz.

2. The method of claim 1, further comprising:
dispensing fluid or a gas from the tip (24) via a passage (33) extending longitudinally through the tip (24).

3. The method of claim 1 or 2, wherein a terminal end (32) of the tip (24) is blunt or hemispherical, and wherein displacing the tow (36) of the preform (34) includes engaging the terminal end (32) of the tip (24) with the tow (36) of the preform (34).

4. The method of any preceding claim, wherein the tip (24) includes a tapered section (26) such that the tip (24) has decreasing cross-sectional area towards the terminal end (32), and wherein displacing the tow (36) of the preform (34) includes engaging the tow (36) of the preform (34) with the tapered section (26).

5. The method of any preceding claim, wherein aligning the tool (12; 12A) with the preform (34) includes orientating the preform (34) normal to the longitudinal direction (A) of the tool (12; 12A).

6. The method of any preceding claim, wherein aligning the tool (12; 12A) includes aligning a pore (38) of the preform (34) with the tip (24), and wherein the pore (38) is defined by a woven pattern of tows (36) of the preform (34).

7. The method of any preceding claim, further comprising:
realigning the tool (12; 12A) with a second region of the preform (34) according to a predetermined pattern; and
displacing a second tow (36) of the preform (34) within the second region, prior to densification, by oscillating the tool (12; 12A) such that the tip (24) displaces the second tow (36) of the preform (34) laterally within the ply (40).

8. The method of any preceding claim, further comprising:
densifying the preform (34) by exposing the preform (34) to a gaseous precursor and matrix material within a reactor.

9. The method of any preceding claim, wherein the tool (12) is a multi-tip tool (12) comprising a plurality of the tips (24), and the step of displacing the tow (36) of the preform (34) comprises displacing multiple tows (36) of the preform (34).

10. The method of claim 9, further comprising:
dispensing fluid or gas from the plurality of parallel tips (24) via passages (33) extending longitudinally through respective tips (12).

11. The method of claim 9 or 10, wherein terminal ends (32) of the plurality of tips (24) are blunt or hemispherical, and wherein displacing tows (36) of the preform (34) includes engaging terminal ends (32) of the plurality of tips (24) with tows (36) of the preform (34).

12. The method of any of claims 9 to 11, wherein each of the plurality of tips (24) includes a tapered section (26) such that the plurality of tips (24) has decreasing cross-sectional areas towards respective terminal ends (32), and wherein displacing tows (36) of the preform (34) includes engaging tows (36) of the preform (34) with the tapered section (26).

13. A method of preparing a preform (34) of a ceramic matrix composite, the method comprising:
aligning a preform (36) with a multi-tip tool (12) for ultrasonic needle insertion, the multi-tip tool (12) comprising:
a tool body (18) extending longitudinally from a collet (16) to an output base (22); and
a plurality of tips (24) extending longitudinally from the output base (22), each of the plurality of tips (24) comprising a shaping portion (27), each of the shaping portions (27) comprising:
a distal section (28) at a terminal end (32) of the tip (24; 24A-H); and
a tapered section (26) extended with a decreasing cross-section from a base cross-sectional area towards the distal section (28); and
displacing tows (36) of the preform (34) laterally within a ply (40), prior to densifying the preform (34), by oscillating the multi-tip tool (12) along the longitudinal direction (A) to engage tows (36) of the preform (34) with distal sections (28) of the plurality of tips (24).

14. The method of claim 13, wherein displacing tows (36) of the preform (34) includes engaging flank surfaces of the tapered section (26) with tows (36) of the preform (34).

15. The method of claim 13 or 14, wherein terminal ends (32) of respective distal sections (28) are blunt, and wherein displacing tows (36) of the preform (34) includes engaging terminal ends (32) of the distal sections (28) with tows (36) of the preform (34).
